# FASCICULE DE BREVET EUROPEEN

(11) **EP 0 711 439 B1**
(45) Date de publication et mention de la délivrance du brevet: **04.09.2002**
(21) Numéro de dépôt: 95921868.6
(22) Date de dépôt: 31.05.1995
(51) Int. Cl.: G06K 7/06

(54) **COMMUTATEUR DE DETECTION DE LA PRESENCE D'UNE CARTE A MEMOIRE ELECTRONIQUE DANS UN DISPOSITIF DE LECTURE-ECRITURE**
SCHALTER ZUR ERKENNUNG DER ANWESENHEIT EINER ELEKTRONISCHEN SPEICHERKARTE IN EINEM KARTEN-LESER/SCHREIBER
SWITCH FOR DETECTING THE PRESENCE OF AN ELECTRONIC MEMORY CARD IN A READ/WRITE DEVICE

(30) Priorité: 01.06.1994 FR 9406684
(43) Date de publication de la demande: 15.05.1996
(73) Titulaire: ITT INDUSTRIES, 39100 Dole (FR)
(72) Inventeur: BRICAUD, Hervé, F-39100 Dôle (FR); VALCHER, Fabrice, F-39100 Dôle (FR)
(74) Mandataire: Kohn, Philippe
(86) Numéro de dépôt international: FR9500709
(87) Numéro de publication internationale: WO95033244

(56) Documents cités:
- EP-A- 0 316 699
- EP-A- 0 474 519
- FR-A- 2 658 364

## Description

La présente invention concerne un commutateur de détection de la présence d'une carte à mémoire électronique, également appelée carte à circuit(s) intégré(s) à contact, dans un dispositif de lecture-écriture.

L'invention concerne plus particulièrement un commutateur du type comportant un corps et des moyens de commande du commutateur avec lesquels coopère le bord transversal antérieur de la carte.

On connaît différentes conceptions d'un tel type de commutateur.

Selon une première conception décrite et représentée dans le document EP-A-0.474.519 (voir le préambule de la revendication 1), les moyens de commande sont réalisés sous la forme d'une lame de commande déformable élastiquement dont une extrémité libre comporte une rampe qui est susceptible de coopérer avec le bord transversal antérieur de la carte et qui comporte un point d'actionnement qui agit directement sur l'organe de déclenchement du commutateur.

Selon une deuxième conception décrite et représentée dans le document EP-A-0.587.497, les moyens de commande comportent un levier qui est monté pivotant sur le commutateur et qui comporte un bec avec lequel est susceptible de coopérer le bord transversal antérieur de la carte, et un point d'actionnement de l'organe de déclenchement.

Ces conceptions ont pour inconvénient d'appliquer à la carte, en position de lecture-écriture, un effort élastique qui la sollicite dans la direction correspondant à l'extraction de la carte, cet effort devant être contrecarré par des moyens complémentaires de freinage de la carte.

Selon ces conceptions, la valeur de l'effort de déclenchement appliqué à l'organe de déclenchement est directement lié à la position de la carte par rapport à la lame de commande ou au levier de commande, en position de lecture-écriture.

Ces deux conceptions proposent également de faire appel à un organe de déclenchement de forme générale bombée qui est déformable élastiquement pour établir une liaison électrique entre deux contacts électriques du commutateur en réponse à un effort axial de déclenchement qui lui est appliqué par la lame de commande, ou par le levier de commande selon une direction sensiblement perpendiculaire au plan de la carte.

Ce type d'organe de déclenchement est particulièrement avantageux en ce qu'il permet de réaliser un ensemble de commutateur de dimensions réduites, et en ce qu'il présente une grande sensibilité. Toutefois, les conceptions proposées dans ces documents ne permettent pas, en association avec un organe de déclenchement du type bombé monostable, de réaliser de manière simple et économique des ensembles de commutateurs du type normalement fermé ou du type normalement ouvert, en l'absence de carte, qui puissent être fournis à l'utilisateur en fonction des besoins de ce dernier.

La présente invention a pour but de proposer une nouvelle conception d'un commutateur du type mentionné précédemment qui permet de remédier à ces inconvénients.

Dans ce but, l'invention propose un commutateur caractérisé en ce que les moyens de commande comportent une lame de commande déformable élastiquement dont une première extrémité est encastrée dans un boîtier du commutateur et dont la seconde extrémité coopère avec un organe de déclenchement du commutateur, et comportent un levier de commande qui agit sur la seconde extrémité de la lame de commande et qui est susceptible de pivoter autour d'un axe parallèle au plan de la carte en réponse à un effort de commande qui lui est appliqué par le bord transversal antérieur de la carte et la seconde extrémité de la lame est une extrémité libre sur laquelle agit un levier de commande monté articulé sur le corps du commutateur.

Selon des modes de réalisation de l'invention :
- en l'absence de carte, la lame de commande sollicite élastiquement l'organe de déclenchement dans le sens correspondant à la fermeture du commutateur, et le levier de commande,sous l'action de la carte, agit sur la seconde extrémité de la lame de commande, à l'encontre de l'élasticité de la lame, pour permettre l'ouverture du commutateur ;
- selon une variante, en l'absence de carte, la lame de commande ne sollicite pas l'organe de déclenchement et le levier de commande agit, sous l'action de la carte, sur la seconde extrémité de la lame de commande, à l'encontre de l'élasticité de la lame, pour provoquer la fermeture du commutateur ;
- le levier de commande est réalisé venu de matière avec la lame de commande dont il prolonge la seconde extrémité ;
- le levier de commande comporte une rampe de commande avec laquelle coopère le bord transversal antérieur de la carte ;
- la lame de commande s'étend longitudinalement selon une direction sensiblement parallèle à la direction d'introduction de la carte ;
- le levier est monté pivotant autour d'un axe sensiblement perpendiculaire à la direction d'introduction de la carte ;
- la première extrémité de la lame de commande est encastrée dans le matériau du boîtier du commutateur ;
- la première extrémité de la lame de commande est fixée par rivetage à chaud dans un élément du boîtier du commutateur ;
- l'organe de déclenchement présente une forme générale bombée et est déformable élastiquement pour établir une liaison électrique entre deux contacts électriques du commutateur en réponse à un effort axial de déclenchement qui lui est appliqué par la seconde extrémité de la lame de commande selon une direction sensiblement perpendiculaire au plan de la carte.

D'autres caractéristiques et avantages de l'invention apparaîtront à la lecture de la description détaillée qui va suivre pour la compréhension de laquelle on se reportera au dessin annexé dans lequel :
- La figure 1 est une vue en section partielle selon la ligne 1-1 de la figure 2 d'un premier exemple de réalisation d'un commutateur conforme aux enseignements de l'invention ;
- la figure 2 est une vue de dessous de la figure 1 ; et
- les figures 3 et 4 sont des vues similaires à celles des figures 1 et 2 illustrant un second mode de réalisation du commutateur.

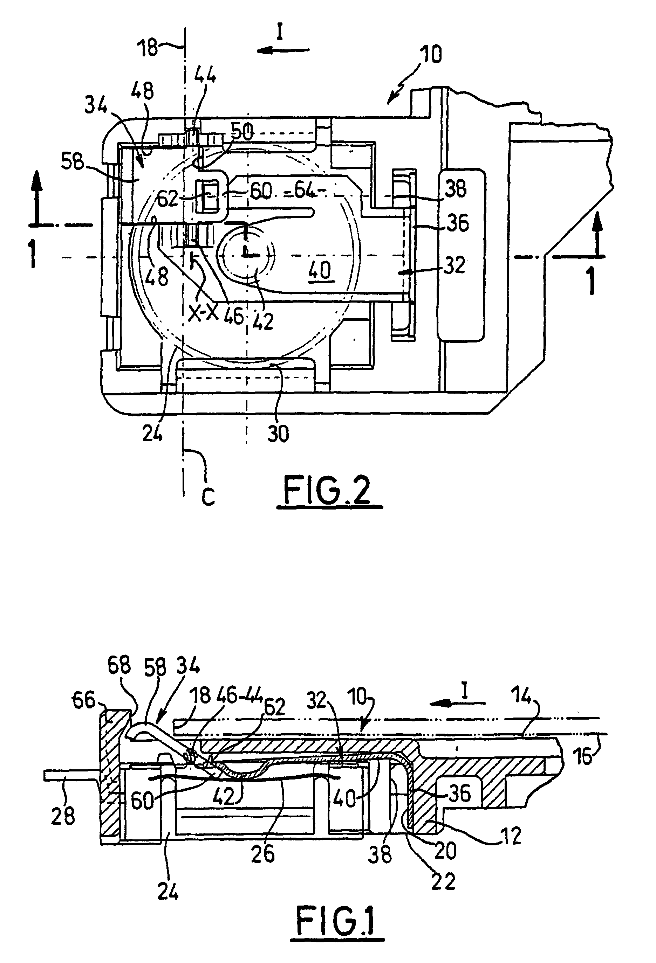

On a représenté sur les figures 1 et 2 un ensemble de commutateur 10 permettant de détecter la présence d'une carte C à mémoire électronique, également appelée carte à microcircuit, dans un dispositif de lecture-écriture (non représenté). L'association du commutateur avec le connecteur doit correspondre aux stipulations de la norme ISO 7810 relative au positionnement de la carte en position de lecture-écriture dans le dispositif de lecture-écriture.

L'ensemble de commutateur 10 est constitué pour l'essentiel par un boîtier de commutateur en matériau isolant 10, de manière à réaliser le commutateur soit sous la forme d'un composant discret qui peut par exemple être monté sur une carte à circuit imprimé appartenant au dispositif de lecture-écriture, soit intégré dans un connecteur électrique pour le raccordement de la carte à mémoire, le boîtier de commutateur pouvant alors être réalisé venu de matière par moulage avec une partie du boîtier en matériau isolant du connecteur ou rapporté sur ce dernier sous la forme d'un appendice du couvercle du connecteur.

Le boîtier 12 délimite une face supérieure 14, en considérant la figure 1, sur laquelle est susceptible de prendre appui et de coulisser la face inférieure 16 d'une carte C dont la direction d'introduction I, qui est perpendiculaire au bord transversal antérieur 18 de la carte C, est indiquée sur les figures.

Le boîtier 12 délimite un logement 20 qui débouche dans la face inférieure 22 et qui est notamment susceptible de recevoir le corps 24 d'un commutateur.

Le corps 24 présente une forme cylindrique et il n'est représenté qu'en silhouette sur la figure 2.

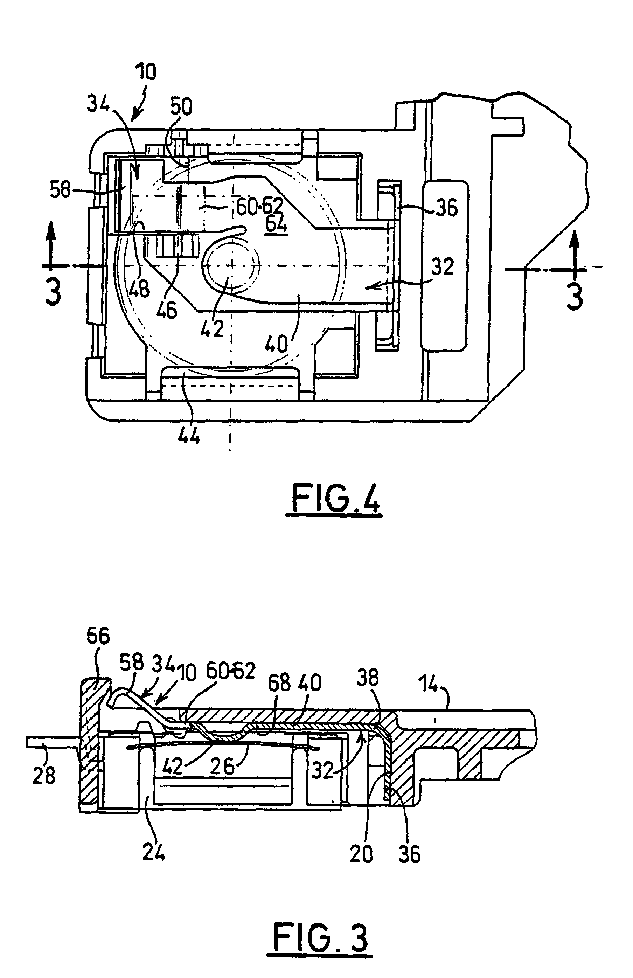

Le commutateur 24 est de préférence du type comportant un organe de déclenchement 26, d'une conception connue, qui est susceptible de se déformer entre une position stable de repos, illustrée sur la figure 3, dans laquelle il présente une forme bombée dont la convexité est tournée vers le haut et une position déformée de fermeture du commutateur dans laquelle il présente une forme bombée dont la convexité est tournée vers le bas et dans laquelle il établit un contact électrique entre au moins deux éléments de contact du commutateur 24 (non représentés) reliés à des bornes de sortie 28 du commutateur.

Le corps 24 du commutateur est maintenu dans le logement 20 par des pattes déformables élastiquement 30 réalisées venues de matière avec le boîtier 12.

Conformément aux enseignements de l'invention, les moyens de commande du commutateur 24 comportent une lame de commande 32 et un levier de commande 34.

La lame de commande 32 est une lame métallique déformable élastiquement dont une première extrémité 36 est encastrée dans un logement 38 du boîtier 12 et s'étend selon une direction sensiblement verticale, en considérant la figure 1, c'est-à-dire selon une direction perpendiculaire au plan général de la carte et de la face supérieure 14.

La première extrémité 36 est reliée par une portion coudée 38 au tronc principal 40 de la lame de commande 32 qui se termine par une seconde extrémité de commande 42 qui s'étend sensiblement en regard du centre de l'organe de déclenchement 26.

A titre de variante (non représentée), la première extrémité 36 peut être réalisée sous la forme d'une plaque qui prolonge le tronc principal 40 dans le même plan et qui est fixée dans le fond supérieur du logement 38 par rivetage à chaud de pion qui s'étendent depuis ce fond à travers des trous formés dans la plaque 36.

Quelle que soit la technique de fixation utilisée pour l'extrémité 36, elle aboutit à l'équivalent d'un encastrement de façon que le tronçon principal 40 travaille comme une poutre déformable élastiquement.

Afin d'agir de manière efficace sur l'organe de déclenchement 26, la seconde extrémité 42 comporte une déformation qui lui confère un profil bombé convexe tourné vers l'organe de déclenchement 26.

Dans le mode de réalisation illustré aux figures 1 et 2, l'ensemble de commutateur 10 est du type normalement fermé, c'est-à-dire que, en l'absence de la carte C, la seconde extrémité 42 de la lame de commande 32 agit en permanence, du fait de son élasticité propre résultant de sa cambrure initiale, sur l'organe de déclenchement 26.

Dans cette première conception, le levier de commande 34, lorsque la carte C est en position introduite, a pour fonction d'agir sur la seconde extrémité 42 de la lame de commande 32, à l'encontre de l'élasticité propre de cette dernière, pour s'opposer à l'effort qu'elle exerce normalement sur l'organe de déclenchement 26 et provoquer l'ouverture de l'ensemble de commutateur 10.

A cet effet, le levier 34 est réalisé sous la forme d'un basculeur.

Le levier 34 est une pièce métallique découpée et emboutie qui présente une forme générale allongée selon la direction d'introduction I et qui comporte deux pattes latérales d'articulation 44 qui prennent appui sur des plots d'articulation 46 formés dans le boîtier 12.

Les plots 46 sont formés au voisinage des bords latéraux 48 d'une fente 50 formée dans la face supérieure 14 du boîtier 12 et qui permet à une portion d'extrémité 58 du levier 34 de faire saillie au-delà de la face supérieure 14.

Le levier 34 est ainsi monté pivotant par rapport au boîtier 12 autour d'un axe géométrique X-X qui est parallèle au plan de la carte C et perpendiculaire à la direction d'introduction I.

L'extrémité 60 du levier 34 opposée à son extrémité 58 est réalisée en forme de boucle et elle reçoit l'extrémité libre 62 d'un bras 64 complémentaire de la partie principale 40 de la lame de commande 32 qui s'étend parallèlement à cette dernière.

L'extrémité libre 62 avec laquelle coopère le levier de commande 34 est située sensiblement au droit de la seconde extrémité de commande 42.

La lame de commande 32 est suffisamment rigide de manière que toute action du levier 34 sur le bras 64 provoque une déformation élastique générale de la lame de commande 32, à l'encontre de son élasticité propre, tendant à provoquer son pivotement autour de la zone courbe de raccordement 38.

Dans sa position de repos illustrée sur les figures 1 et 2, la portion d'extrémité 58 du levier de commande 34 se présente sous la forme d'une rampe inclinée avec laquelle est susceptible de coopérer le bord transversal antérieur 18 de la carte C.

Lorsque la carte C est introduite complètement dans sa position de lecture-écriture, c'est-à-dire lorsqu'elle est déplacée de la droite vers la gauche en considérant la figure 1, son bord transversal antérieur 18 coopère avec la portion 58 en forme de rampe du levier de commande 34 et provoque le pivotement de ce dernier autour de l'axe X-X dans le sens anti-horaire en considérant la figure 1.

Lors de cette rotation, l'extrémité en forme de boucle 60 soulève l'extrémité 62 du bras 64 de la lame de commande 32 et provoque donc simultanément le déplacement vertical vers le haut de la seconde extrémité 42 du tronc principal 40 de la lame de commande 32 provoquant ainsi l'ouverture du commutateur.

Du fait de l'agencement de l'axe d'articulation X-X en-dessous de la face supérieure 14, et des dimensions du levier de commande 34, la portion d'extrémité 58 formant rampe de commande se situe, en position introduite de la carte, en-dessous de la face inférieure 16 de cette dernière et les moyens de commande du commutateur 24 n'appliquent donc alors plus aucun effort sur la carte C tendant à l'extraire du dispositif de lecture-écriture, c'est-à-dire à l'encontre de l'effort d'introduction. Cette conception procure également une surcourse de la carte après le point de déclenchement du commutateur qui permet d'absorber les tolérances de fabrication de la carte et des composants du dispositif de lecture-écriture.

La face supérieure 14 du boîtier 12 comporte également une portion en saillie 66 qui délimite une surface de butée 68 avec laquelle est susceptible de coopérer le bord transversal antérieur 18 de la carte C en fin de course d'introduction de la carte C.

Lorsque l'utilisateur retire la carte C, c'est-à-dire qu'il la déplace de la gauche vers la droite en considérant la figure 1, le levier de commande 34 bascule autour de l'axe X-X, dans le sens horaire en considérant la figure 1, sous l'action de l'effort élastique qui est appliqué à son extrémité 60 par la lame de commande 32 qui retrouve, du fait de son élasticité propre, sa position stable de repos et de fermeture du commutateur 24 illustré sur la figure 1.

On décrira maintenant le mode de réalisation illustré aux figures 3 et 4.

Sur ces figures, des éléments identiques ou similaires à ceux représentés aux figures 1 et 2 sont désignés par les mêmes chiffres de référence.

Comme on peut le constater, le boîtier moulé 12 est en tout point identique à celui représenté sur les figures 1 et 2.

Dans ce second mode de réalisation, l'ensemble de commutateur 10 est du type normalement ouvert c'est-à-dire que, en l'absence de la carte C, l'organe de déclenchement 26 occupe sa position stable de repos correspondant à l'ouverture du commutateur 24.

Le levier de commande 34 est ici réalisé venu de matière avec la lame de commande 40.

En effet, comme on peut le voir sur la figure 4, la portion d'extrémité 60 prolonge directement l'extrémité 62 du bras 64, cette zone de raccordement 60-62, ombrée sur la figure 4, constituant également un point de flexion dont la fonction sera expliquée par la suite.

Lorsque l'utilisateur introduit une carte C dans le dispositif de lecture-écriture, le bord transversal antérieur 18 de la carte C (non représentée aux figures 3 et 4) vient coopérer avec la portion d'extrémité 58 formant rampe du levier de commande 34 et provoque un pivotement général de l'ensemble de la lame de commande 40 et du levier de commande 34 sensiblement autour de la portion incurvée de raccordement 38 qui provoque un déclenchement du commutateur du fait de la déformation de l'organe de déclenchement 26 par la seconde extrémité 42 de la lame de commande 32.

Cette déformation se produit progressivement dès que le bord transversal antérieur 18 de la carte C coopère avec la rampe 58, la poursuite de l'effort d'introduction provoquant ensuite une flexion partielle du levier de commande 34 par rapport au plan général du tronc 40 et du bras 64 de la lame de commande 32 autour de la zone 60-62, c'est-à-dire autour d'un axe de flexion sensiblement perpendiculaire à la direction I.

Grâce à ce phénomène de flexion, et en position introduite de la carte, la portion formant rampe 58 se trouve en-dessous de la face inférieure 16 de la carte C sans appliquer alors aucun effort sur la carte C à l'encontre de l'effort d'introduction.

Lorsque l'utilisateur retire la carte C, et du fait de l'élasticité propre de la lame de commande 32 et de sa portion d'extrémité formant levier de commande 34, ces éléments retrouvent leur position illustrée sur la figure 3 dans laquelle le tronc principal 40 de la lame de commande 32 prend notamment appui contre une surface d'appui 68 formée en vis-à-vis dans le fond du logement 20.

Comme on peut le constater sur la figure 4, les portions 46 du boîtier 12, qui dans le premier mode de réalisation illustré aux figures 1 et 2 constituent des pivots d'articulation du levier 34, sont sans utilité mais elles n'interfèrent pas avec le bon fonctionnement du commutateur du type normalement ouvert.

La combinaison du dôme 26 avec les moyens de commande de son déclenchement permet avantageusement d'obtenir un phénomène sonore de "clic-clac" lors du déclenchement.

Afin d'assurer l'étanchéité du commutateur, il est possible d'interposer un film souple d'étanchéité entre la face supérieure ouverte du commutateur et l'élément 42. Le film peut notamment être adhésif et son pourtour est ainsi collé de manière étanche le long du bord supérieur du corps 24 du commutateur.

A titre de variante, le corps 24 peut être fixé dans son logement 20 par une technique de rivetage à chaud de plots (non représentés), qui remplacent les pattes, déformables élastiquement 30.

## Revendications

1. Commutateur de détection de la présence d'une carte (C) à mémoire électronique dans un dispositif de lecture-écriture comportant un connecteur électrique pour le raccordement de la carte à mémoire, comportant un boîtier (12) des moyens de commande du commutateur avec lesquels coopère le bord transversal antérieur (18) de la carte (C), les moyens de commande comportant une lame de commande (32) déformable élastiquement dont une première extrémité (36) est encastrée dans le boîtier (12) du commutateur et dont la seconde extrémité (42) coopère avec un organe (26) de déclenchement du commutateur, et comportant un levier de commande (34) qui agit sur la seconde extrémité (42) de la lame de commande (32) et qui est susceptible de pivoter autour d'un axe parallèle au plan de la carte (C) en réponse à un effort de commande qui lui est appliqué par le bord transversal antérieur de la carte, **caractérisé en ce que** la seconde extrémité (42, 62) de la lame de commande (32) est une extrémité libre sur laquelle agit le levier de commande (34) monté articulé (44, 46) sur le corps du commutateur.

2. Commutateur selon l'une quelconque des revendications précédentes, **caractérisé en ce que** le levier de commande comporte une rampe de commande (58) avec laquelle coopère le bord transversal antérieur (18) de la carte (C).

3. Commutateur selon l'une quelconque des revendications précédentes, **caractérisé en ce que** la lame de commande s'étend longitudinalement selon une direction sensiblement parallèle à la direction (I) d'introduction de la carte (C).

4. Commutateur selon l'une quelconque des revendications précédentes, **caractérisé en ce que** le levier de commande (34) est monté pivotant autour d'un axe sensiblement perpendiculaire à la direction d'introduction (I) de la carte (C).

5. Commutateur selon l'une quelconque des revendications précédentes, **caractérisé en ce que** la première extrémité (36) de la lame de commande (32) est encastrée dans le matériau du boîtier (12) du commutateur.

6. Commutateur selon l'une quelconque des revendications 1 à 4, **caractérisé en ce que** la première extrémité (36) de la lame de commande (32) est fixée par rivetage à chaud dans un élément du boîtier (12) du commutateur.

7. Commutateur selon l'une quelconque des revendications précédentes, **caractérisé en ce que** l'organe de déclenchement (26) présente une forme générale bombée et est déformable élastiquement pour établir une liaison électrique entre deux contacts électriques du commutateur en réponse à un effort axial de déclenchement qui lui est appliqué par la seconde extrémité (42) de la lame de commande (32), selon une direction sensiblement perpendiculaire au plan de la carte (C).

## Patentansprüche

1. Schalter zur Erkennung der Anwesenheit einer Karte (C) mit elektronischem Speicher in einer Lese-Schreib-Vorrichtung, welcher einen elektrischen Verbinder zur Kontaktierung der Speicherkarte aufweist, welcher ein Gehäuse (12) und Steuermittel des Schalters, mit denen der vordere Querrand (18) der Karte (C) zusammenwirkt, umfasst, wobei die Steuermittel eine elastisch deformierbare Steuerzunge (32) umfassen, von der ein erstes Ende in das Gehäuse (12) des Schalters eingespannt ist und deren zweites Ende (42) mit einem Organ (26) zum Auslösen des Schalters zusammenwirkt, und einen Steuerhebel (34) umfassen, welcher auf das zweite Ende (42) der Steuerzunge (32) wirkt und welcher geeignet ist, infolge einer Steuerkraft, die auf ihn durch den vorderen Querrand der Karte ausgeübt wird, um eine zur Ebene der Karte (C) parallele Achse zu drehen,
**dadurch gekennzeichnet, dass** das zweite Ende (42, 62) der Steuerzunge (32) ein freies Ende ist, auf welches der Steuerhebel (34) wirkt, der auf den Rumpf des Schalters gelenkig (44, 46) montiert ist.

2. Schalter nach Anspruch 1,
**dadurch gekennzeichnet, dass** der Steuerhebel eine Steuerrampe (58) umfasst, mit welcher der vordere Querrand (18) der Karte (C) zusammenwirkt.

3. Schalter nach einem der vorhergehenden Ansprüche,
**dadurch gekennzeichnet, dass** die Steuerzunge in Längsrichtung in einer zur Einführrichtung (I) der Karte (C) im wesentlichen parallelen Richtung verläuft.

4. Schalter nach einem der vorhergehenden Ansprüche,
**dadurch gekennzeichnet, dass** der Steuerhebel (34) um eine zur Einführrichtung (I) der Karte (C) im wesentlichen senkrechte Achse drehbar montiert ist.

5. Schalter nach einem der vorhergehenden Ansprüche,
**dadurch gekennzeichnet, dass** das erste Ende (36) der Steuerzunge (32) in dem Material des Gehäuses (12) des Schalters eingespannt ist.

6. Schalter nach einem der Ansprüche 1 bis 4,
**dadurch gekennzeichnet, dass** das erste Ende (36) der Steuerzunge (32) durch Heißnieten in einem Element des Schaltergehäuses (12) befestigt ist.

7. Schalter nach einem der vorhergehenden Ansprüche,
**dadurch gekennzeichnet, dass** das Auslöseorgan (26) eine allgemein ausgebauchte Form aufweist und elastisch deformierbar ist, um infolge einer axialen Auslösekraft, die auf dieses durch das zweite Ende (42) der Steuerzunge (32) in einer zur Ebene der Karte (C) im wesentlichen senkrechten Richtung ausgeübt wird, eine elektrische Verbindung zwischen zwei elektrischen Kontakten des Schalters zu erstellen.

## Claims

1. Switch for detecting the presence of an electronic memory card (C) in a read/write device, including an electrical connector for connecting a memory card including a case (12) and means for operating the switch, with which means the front transverse edge (18) of the card (C) cooperates, the operating means including an elastically deformable operating blade (32), a first end (36) of which is embedded in a case (12) of the switch and the second end (42) of which engages with a member (26) for tripping the switch, and including an operating lever (34) which acts on the second end (42) of the operating blade (32) and which is capable of pivoting about an axis parallel to the plane of the card (C) in response to an operating force which is applied to it by the front transverse edge of the card, **characterised in that** the second end (42, 62) of the operating blade (32) is a free end on which an operating lever (34) acts, the latter being mounted so as to be articulated (44, 46) on the body of the switch.

2. Switch according to claim 1, **characterised in that** the operating lever includes an operating ramp (58) with which the front transverse edge (18) of the card (C) engages.

3. Switch according to any one of the preceding claims, **characterised in that** the operating blade extends longitudinally in a direction substantially parallel to the insertion direction (I) of the card (C).

4. Switch according to any one of the preceding claims, **characterised in that** the operating lever (34) is mounted so as to pivot about an axis substantially perpendicular to the insertion direction (I) of the card (C).

5. Switch according to any one of the preceding claims, **characterised in that** the first end (36) of the operating blade (32) is embedded in the material of the case (12) of the switch.

6. Switch according to any one of the claims 1 to 4, **characterised in that** the first end (36) of the operating blade (32) is fixed by hot riveting in an element of the case (12) of the switch.

7. Switch according to any one of the preceding claims, **characterised in that** the tripping member (26) has a convex general shape and is elastically deformable in order to establish an electrical connection between two electrical contacts of the switch in response to an axial tripping force which is applied to it by the second end (42) of the operating blade (32), in a direction substantially perpendicular to the plan of the card (C).
